# EUROPEAN PATENT SPECIFICATION

(11) **EP 3 272 972 B1**
(45) Date of publication and mention of the grant of the patent: **04.03.2020**
(21) Application number: 17182875.9
(22) Date of filing: 24.07.2017
(51) Int. Cl.: E04H 15/08, F16B 47/00

(54) **SHELTER ATTACHMENT SYSTEM**
SCHUTZDACHBEFESTIGUNGSSYSTEM
SYSTÈME DE FIXATION D'ABRI

(30) Priority: 22.07.2016 GB 201612772
(43) Date of publication of application: 24.01.2018
(60) Divisional application: 20153434.4
(73) Proprietor: Dometic UK Awnings Ltd, Little Braxted Witham Essex CM8 3EU (GB)
(72) Inventor: BARROW, Stuart Ross Boden, Sudbury, Essex CO10 8AS (GB)
(74) Representative: Dummett Copp LLP

(56) References cited:
- DE-C- 531 903
- US-A- 3 068 046
- US-A1- 2006 138 292

## Description

### BACKGROUND

### a. Field of the Invention

This invention relates to devices and a method for securing a shelter to a rigid structure, and in particular relates to devices and a method for securing a flexible panel of an awning to a structure such as a caravan.

### b. Related Art

Awnings are often attached to a variety of structures such as caravans, motorhomes, buildings and boats to provide an area of protection. The awnings are traditionally attached along an upper edge by a keder attachment system. This comprises a keder beading that is received in a keder track or channel. Typically the keder beading will be attached to an edge of the awning and the keder track will be connected to the structure, e.g. a roof or upper section of a caravan. The awning is connected to the structure by sliding the keder beading through the track, which is often in the form of an aluminium awning channel. This system can, therefore, provide a secure and weather-tight seal between an awning roof and a side panel of a caravan or motorhome.

Typically the sides of a lightweight awning do not have any direct means of attachment to the structure, but are held in position by pegging or otherwise securing a bottom corner or edge of the awning to the ground to create enough tension to form a reasonable wind and weatherproof seal between the side of the awning and the structure.

It is known to position an upright pole proximate an edge of the awning adjacent to the structure. One example of an upright pole is a telescopic pole with a spike at a first end or base and a plate element at a second end or top. The plate element fits into a pocket in a top corner of the awning, and the base of the pole is seated on or protrudes through a lower part of the awning. This creates tension in the side panel of the awning proximate the edge. In some cases it is known to provide a vertical strip of foam padding sewn into a vertical edge of the awning. The upright pole is extended such that the awning panel is under tension and the pole is pushed against the foam padding which in turn is pressed against a surface of the structure, such as the side of a caravan. This helps to create a weatherproof seal between the side of the awning and the structure. The upright pole may then be secured in position with pre-fixed ties.

DE 531 903 discloses an adjustable mirror including a holder with a suction cup. The holder includes a nut on a threaded bolt and the holder is arranged to be secured to a supporting surface by turning a ring which thereby rotates the nut which creates a negative pressure in the cavity of the suction cup. The mirror is fixed within the ring.

US 2006/0138292 discloses a holding device with a suction cup wherein the suction cup has a first and second plate having a concave shape and a threaded shaft. A nut is arranged to be rotated to urge a periphery of a bell against the edge of the second plate in order to maintain a vacuum in a space defined by the bell and the second plate.

US 3 068 046 discloses an automobile windshield awning including suction cup panel securing devices. The suction cup devices include threaded shanks and clamping nuts to secure awning panels to an automobile.

It is an aim of the present invention to provide an additional or alternative means of securing an awning to a structure to assist in creating a weatherproof seal between a part of the awning and the structure.

### SUMMARY OF THE INVENTION

According to a first aspect of the present invention there is provided an attachment device for securing a shelter to a rigid structure, the shelter comprising a flexible panel, and the attachment device comprising:
- an anchor element for securing to a substantially vertical surface of the rigid structure, the anchor element comprising a suction disc and a threaded post, the suction disc comprising on opposite sides a first surface and a second surface, the first surface being configured to create a partial vacuum between the anchor element and said surface whereby, in use, the anchor element is secured to said surface and the threaded post extends away from the second surface whereby said post extends in a direction away from the surface of the structure when the anchor element is secured to the structure;
- a clamping element including a threaded recess or bore for receiving and engaging with the threaded post to secure the clamping element to the anchor element, such that a part of said flexible panel is clamped between the anchor element and the clamping element; and
- a grip element located between at least a part of the anchor element and the clamping element, the threaded post extending through an aperture in the grip element wherein the grip element is shaped and configured to allow a central region of the first surface of the suction disc to be pulled in a direction away from said substantially vertical surface of the structure to create the partial vacuum while an edge region of the first surface remains in contact with said surface of the structure;
   and characterised in that:
   the grip element comprises a flange configured such that, in use, the flexible panel is clamped between the flange and a part of the anchor element.

The first surface therefore provides a suction surface of the suction disc.

The shelter will typically be in the form of a canopy or awning that may include a roof panel and one or more side panels. It is envisaged that the attachment device will be used to secure an edge region of a side panel to a surface of the rigid structure to increase the resistance of the shelter to the elements such as wind and rain.

In particular, the edge region may be a return portion or strip of the flexible panel oriented at right angles of a main or side wall portion of the flexible panel, the main portion therefore being adapted to extend away from said substantially vertical surface and the return portion or strip being adapted to extend parallel with said surface, in order to reduce drafts and provide weather proofing.

The rigid structure will typically be a caravan or motorhome, with the canopy or awning extending from one side of the caravan or motorhome. The attachment device may, therefore, be used to secure an edge region of a side panel of the awning or canopy to a side of the caravan or motorhome to provide a weatherproof shelter.

The means for securing the anchor element to the structure is preferably designed to allow the anchor element to be repeatedly attached to and removed from the structure. As such, it is desirable if the anchor element is surface mounted to the structure, and it is particularly desirable for the securing means to be nondestructive. This means that the integrity of the surface of the rigid structure does not have to be compromised to secure the anchor element to the structure.

The anchor element is secured to the structure by means of suction adhesion in which a partial vacuum is formed between the anchor element and the structure. It is desirable for the anchor element to connect directly to a part of the surface of the structure without requiring an additional mounting element to be provided on the structure. This allows the anchor element, and therefore the attachment device, to be secured to any required part of the structure and to be freely repositioned when necessary.

The connecting means comprises a projection that extends in a direction away from the surface of the structure when the anchor element is secured to the structure. The projection is in the form of a threaded post that engages with a complementary female threaded recess or opening in the clamping element. The flexible panel of the shelter is provided with a hole through which the post extends. In this way, when the flexible panel is engaged with the shelter, at least a part of the anchor element is primarily located on a first side of the flexible panel and the clamping element is primarily located on a second opposite side of the flexible panel, with the post extending through the panel.

In order to form a reasonably weatherproof connection and to reduce the possibility of tearing the flexible panel, it is advantageous if the attachment device clamps a part of the shelter over an area of the flexible panel. Accordingly, the anchor element and clamping element may include clamping surfaces between which the flexible panel is gripped.

The attachment device may further comprise a former. This locates between at least a part of the anchor element and the clamping element. In preferred embodiments the anchor element is secured to the structure by forming a partial vacuum between the suction surface of the anchor element and a surface of the structure. In these embodiments the grip element is shaped and configured to allow a central region of the suction surface to be pulled in a direction away from the surface of the structure to create the partial vacuum while an edge region of the suction surface remains in contact with the surface of the structure.

The grip element, if provided, may be permanently attached to the clamping element or may be separate from but engageable with the clamping element. Typically, the flexible panel of the shelter will be clamped between the grip element and a part of the anchor element. As such, the grip element may include a clamping surface.

The grip element preferably includes a dome-shaped disc. The grip element comprises a flange configured such that, in use, the flexible panel is clamped between the flange and a part of the anchor element. The flange preferably extends radially outwards from the dome-shaped disc, and is most preferably has opposite annular surfaces for making gripping contact with, on the one hand, a surface of the flexible panel and, on the other hand a clamping surface of the clamping element.

In a preferred embodiment of the invention, the clamping element is a cap, and the clamping surface of the clamping element is a circular rim of the cap.

The cap preferably has a substantially concave interior with a volume sufficient to accommodate the dome-shaped disc when the clamping element is clamped to the grip element.

The anchor element and the clamping element are preferably separate and distinct elements of the attachment device. However, in some embodiments the clamping element may be movably connected to the anchor element. The connection between the anchor element and the clamping element may be by means of a strap or hinge.

Also according to a second aspect of the present invention there is provided an assembly comprising a shelter including a flexible panel and at least one attachment device for securing the flexible panel to a rigid structure, the attachment device being according to the first aspect of the invention and the flexible panel comprising opposite first and second sides, the suction disc being located on the first side of the flexible panel, the threaded post extending through a hole in the flexible panel and the clamping element being primarily located on the second side of the flexible panel.

As described above, the connecting means comprises a threaded post that is engageable with a female threaded recess of the clamping element. In these embodiments the flexible panel includes a hole through which the post extends.

Typically a plurality of attachment devices will be used to secure a length of the flexible panel to the structure. The attachment devices will be spaced apart along an edge region of the panel, and the flexible panel may, therefore, include a corresponding plurality of holes spaced apart along an edge region of the panel. The present invention also provides a method of securing a flexible panel of a shelter to a rigid structure using at least one attachment device, the flexible panel having for the or each attachment device a hole proximate an edge region thereof and the or each attachment device being according to the first aspect of the invention, the method comprising:
- attaching the suction disc of the or each anchor element to a surface of the structure;
- locating a part of the flexible panel between a part of the anchor element and the clamping element of the attachment device such that the threaded post of the or each anchor element extends through a corresponding hole in the flexible panel; and
- engaging the threaded recess or bore of the or each clamping element with the threaded post of the corresponding anchor element such that said part of the flexible panel is clamped between the anchor element and the clamping element.

In preferred embodiments the anchor element includes connecting means in the form of a threaded post that engages with a complementary female threaded recess or opening in the clamping element. In these embodiments the flexible panel of the shelter is provided with a hole through which the post extends. As such, the method comprises attaching the anchor element to the surface of the structure such that the post extends in a direction away from the surface, positioning the flexible panel over the anchor element such that the post protrudes through the hole in the flexible panel, and engaging the clamping element with the post of the anchor element to clamp the flexible panel between a part of the anchor element and a part of the clamping element.

The method may further comprise positioning the grip element of the attachment device between the flexible panel and the clamping element before engaging the clamping element with the anchor element. In these embodiments a part of the flexible panel is clamped between the anchor element and the grip element.

In embodiments in which the anchor element comprises a threaded post for engagement with the clamping element, the method preferably further comprises positioning the grip element of the attachment device such that the threaded post extends through an aperture in the grip element.

As described above, it is envisaged that a plurality of attachment devices will be used to secure a length of a flexible panel. Accordingly, the method preferably comprises attaching a plurality of anchor elements to a surface of the structure in a spaced apart configuration; locating an edge region of the flexible panel between the anchor elements and a plurality of clamping elements; and engaging each of the clamping elements with a respective one of the anchor elements such that the edge region of the flexible panel is clamped between the anchor elements and the clamping elements along a length of the edge region.

### BRIEF DESCRIPTION OF THE DRAWINGS

The invention will now be further described by way of example only and with reference to the accompanying drawings, in which:
Figure 1 shows part of a side panel of an awning secured to a side of a caravan, an edge of the awning being secured by means of attachment devices according to the present invention;
Figure 2 shows an attachment device according to the present invention securing a part of an awning to a structure;
Figure 3 is an exploded view of an attachment device according to a preferred embodiment of the present invention; and
Figure 4 is a further exploded view of the attachment device of Figure 3.

### DETAILED DESCRIPTION

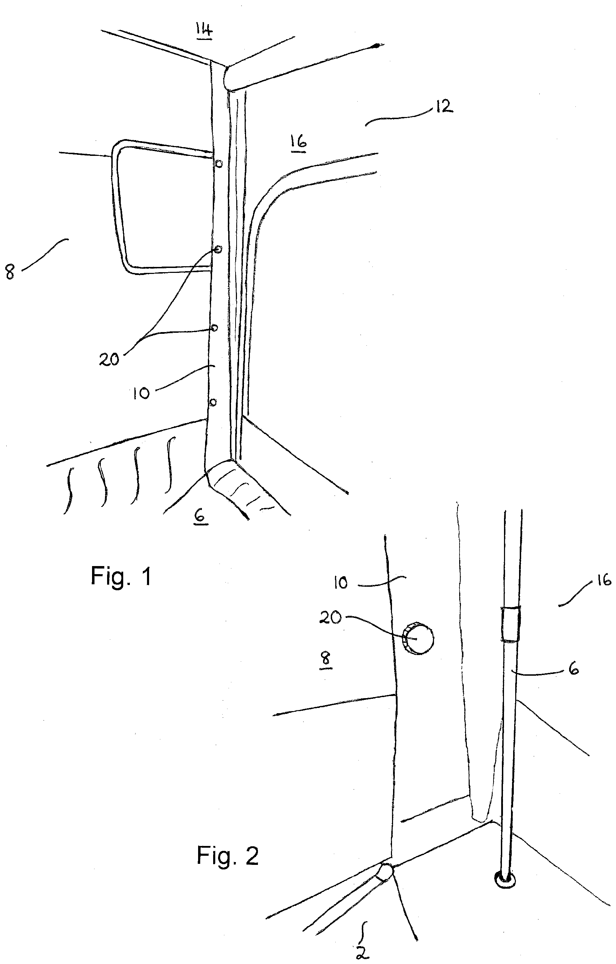

Figure 1 illustrates a plurality of attachment devices 20 according to the invention used to secure an edge region 10 of an awning 12 to a caravan 8. The awning 12 comprises a flexible roof panel 14 that is secured along one edge to an upper part of the side of the caravan 8 and a flexible side panel 16 that extends substantially vertically between the roof panel 14 and the ground 2. The side panel 16 comprises along one edge an edge region or strip 10, which provides a 90° return so that the edge region can be located substantially flush against the side of the caravan. The awning 12 provides an area outside but adjacent to the caravan 8 which is sheltered from the elements such as wind and rain. The flexible panels 14, 15, 16 of the awning 12 will typically be made from canvas or a suitable polymeric material.

To improve the degree of shelter afforded by the awning 12, the attachment devices 20 secure the edge region 10 of the side panel 16 of the awning 12 against the side of the caravan 8, to reduce the amount of air flow between the awning 12 and the side of the caravan 8 and to create a relatively weatherproof seal between the side panel 16 and the caravan 8. The attachment devices 20 secure the flexible side panel 16 to the side of the caravan 8 at discrete points along the length of the edge 10 of the side panel 16. It will be appreciated that it is desirable if the sections of the edge region 10 of the side panel 16 between the attachment devices 20 are pulled taut so that the edge region 10 lies against the side of the caravan 8 over a significant portion of its length.

The attachment devices 20 each comprise an anchor element 22 that is attached to a surface of the caravan 8 and a clamping element 24 that engages with the anchor element 22 to clamp the flexible panel 16 of the awning 12 between the anchor element 22 and the clamping element 24. The anchor element 22 is preferably removeably attached to the surface of the caravan 8 so that the whole of the attachment device 20 can be removed when not in use. Furthermore, it is desirable if the anchor element 22 is surface mounted and does not require any holes or notches to be formed in the surface of the caravan 8. This not only means that the integrity of the structure of the caravan 8 is maintained, but also means that the attachment devices 20 can be attached to the caravan 8 in any suitable location on the surface of the caravan 8 and may be attached in different positions each time they are used.

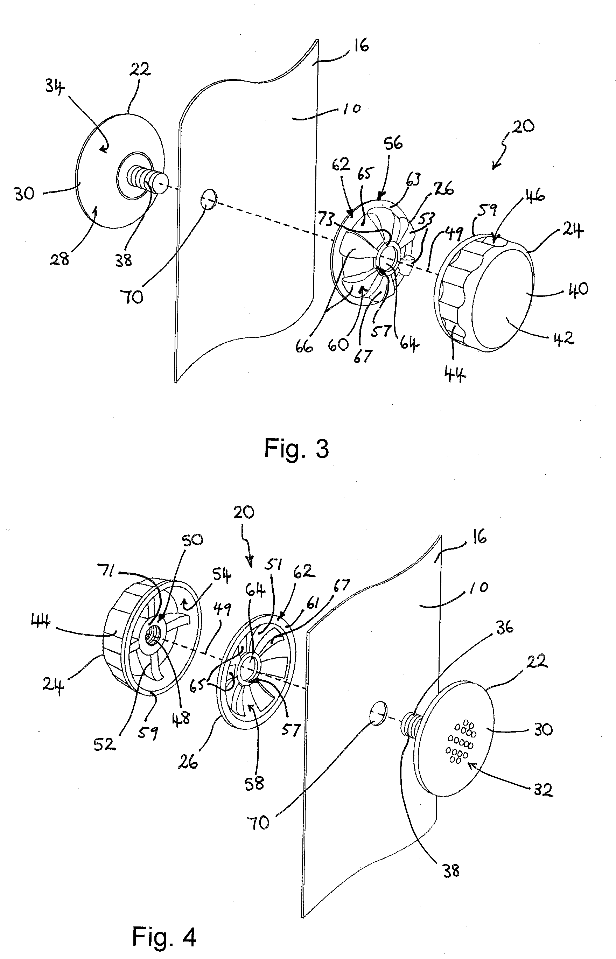

A preferred example of an attachment device 20 according to the present invention is shown in Figures 3 and 4. As described above, the attachment device 20 comprises an anchor element 22 and a clamping element 24. In this embodiment, the attachment device 20 also includes a grip element 26 that is located between the anchor element 22 and the clamping element 24.

The anchor element 22 comprises means 28 for securing the anchor element 22 to a surface of a caravan 8. The securing means 28 is in the form of a substantially circular suction disc or suction cup 30. The suction disc 30 comprises a first surface 32 which, in use, contacts the surface of the caravan 8, and an opposite second surface 34.

Connecting means 36 in the form of a post 38 projects from the second surface 34 of the suction disc 30. The post 38 extends from a central part of the suction disc 30 in a direction away from the first surface 32 of the disc 30. The post 38 is threaded for engagement with the clamping element 24.

The clamping element 24 is in the form of a cap 40 having a substantially circular cover plate 42 and a substantially cylindrical side wall 44 extending from a peripheral edge of the cover plate 42. An outer surface 46 of the side wall 44 is formed into a series of ridges and grooves to provide a gripping surface. In use, a user grips the outer surface 46 of the cap 40 to rotate the clamping element 24 with respect to the anchor element 22 as described below. The clamping element 24 further comprises means for engaging with the anchor element 22. In particular, the clamping element 24 includes a threaded recess or bore 48 that is designed to engage with the threaded post 38 of the anchor element 22. The male threaded post 38 of the anchor element 22 and the female threaded bore 48 of the clamping element 24 allows the clamping element 24 to be repeatedly engaged with and removed from the anchor element 22.

In this embodiment the threaded bore 48 is formed in a post 50 that extends from a central region of the cover plate 42 in the same direction as the side wall 44. The bore 48 extends along a longitudinal axis 49 of the post 50 which is substantially perpendicular to the plane of the cover plate 42. A plurality of ribs 52 extends radially outwardly from the post 50 to an internal surface 54 of the side wall 44. The ribs 52 are spaced apart around the circumference of the post 50.

The grip element 26 comprises a curved or dome-shaped disc 56 having a first, substantially concave surface 58 and a second, substantially convex surface 60. A radial flange 62 extends from a circumferential edge of the curved disc 56, and the diameter of an outer edge of the flange 62 is substantially the same as a diameter of the suction disc 30 of the anchor element 22. The flange has opposite first and second annular surfaces, the first annular surface 61 facing towards the flexible panel and the second annular surface 63 facing towards the cap 40. The grip element 26 further includes a central aperture 64 in the curved disc 56 that extends fully through the thickness of the disc 56. The aperture 64 is sized to receive the threaded post 38 with a clearance fit. The dome-shaped disc 56 of the grip element 26 will typically be made from a suitable rigid elastomeric material, and is preferably made from polypropylene.

The dome-shaped disc 56 comprises a hub 57 around the aperture 64. A region of the curved disc 56 between the aperture 64 and the flange 62 is formed into a series of radially extending spokes 66 which together have outer faces 53 that provide the substantially convex surface 60 of the grip element. Inner faces 51 of the spokes 66 together provide the substantially concave surface 58 of the grip element. The outer faces 53 of the spokes 66 do not contact the ribs 52 of the clamping element 24 during use of the attachment device 20. Apart from the engagement of the threaded bore 48 and the threaded post 38, the main contact between the cap 40 and the grip element is around a rim 59 of the cap and the second annular surface 63 of the flange 62 facing towards the cap. The rim 59 is preferably provided at an end of the substantially cylindrical side wall 44. The ribs 52 provide reinforcement between the cap outer wall 44 and the post 50. Overtightening of the clamping element 24, which could result in the suction disc 30 becoming too curved to retain the partial vacuum, is prevented ultimately by contact between an annular end surface 71 of the post and an opposed annular surface 73 of the hub.

The inner faces 51 of the spokes are shaped to accommodate the curvature of the second surface 34 of the suction disc 30 when this is pulled outwards away from the attachment surface 8 upon tightening of the clamping element 24. As tightening progresses, the second surface 34 of the suction disc bulges outwards and pushes the flexible panel 16 in the vicinity of the hole 70 up against the inner faces 51 of the spokes 66. The spokes have therebetween a series of corresponding slots 65 which therefore also extend radially between the hub 57 and inner edge of the flange 62. The slots are apertures 65 extending between the inner and outer faces 51, 53 of the spokes that provide the concave and convex surfaces 58, 60 of the dome-shaped disc 56. Between the inner and outer faces 51, 53 of the spokes, each slot is bounded by a pair of opposed side faces 67 of the spokes, each of which lies in an axial plane, i.e. a plane passing through the longitudinal axis 49 of the assembly.

As the flexible panel 16 in the vicinity of the hole 70 is pushed up against the inner, concave faces 51 of the spokes, edges of the spokes between the inner and side faces 51, 67 begin to engage with the flexible panel, which tends to bulge into the slots 65. The effect of this is an engagement of the flexible panel 16 around the hole 70 with the slots 65 and spokes 66 to prevent relative rotation between the flexible panel and the grip element 26 as the rim 59 of the clamping element 24 bears against the flange 62 to clamp that part of the flexible panel between the anchor element 22 and the clamping element 24.

The flexible panel may, optionally, be made from a polymeric material, for the purposes of rain resistance. Although such materials are not, in general impermeable, it would be possible for such materials to trap air or water. The slots 65 are therefore also adapted to help prevent air or moisture from being trapped between the flexible panel 16 and grip element 26 as tightening progresses, by providing a path for air or moisture to escape into the void within the cap, and ultimately through the seam between the rim and flange, which is not adapted in any way to be air tight.

In order to use the attachment device 20 with a flexible panel 16, a hole 70 must be formed in the panel 16 through which the post 38 of the anchor element 22 can extend. The edges of the hole 70 may be sealed or otherwise treated or covered to reduce the likelihood of the material of the flexible panel 16 tearing in this region.

To use the attachment device 20, the suction disc 30 is pressed onto a suitable smooth surface of the caravan 8 in an appropriate location relative to the edge region 10 of the side panel 16 of the awning 12. It will be appreciated that the suction disc 30 may be applied to any suitable surface such as the outer wall or skin, a window or other rigid structural panel of the caravan 8. With the suction disc 30 attached to the surface of the caravan 8, the threaded post 38 extends away from the surface, and preferably extends in a direction substantially perpendicular to the part of the surface to which the suction disc 30 is attached.

The flexible panel 16 of the awning 12 is then positioned over the anchor element 22 and pushed over the post 38 such that the post 38 extends through the hole 70 in the flexible panel 16. In this position the flexible panel 16 lies against the second surface 34 of the suction disc 30.

The grip element 26 is located over the post 38 such that the post 38 extends through the aperture 64. The grip element 26 is oriented so that the concave surface 58 is adjacent the flexible panel 16 and the convex surface 60 faces away from the suction cup 30 of the anchor element 22.

Finally the clamping element 24 is secured to the anchor element 22 by screwing the cap 40 onto the end of the threaded post 38. As the screw cap 40 is screwed further onto the post 38, the flexible panel 16 is clamped between the flange 62 of the grip element 26 and an outer circumferential region of the suction disc 30. Further rotation of the clamping element 24 about the post 38 causes the central region of the suction disc 30 to be pulled in a direction away from the surface of the caravan 8. This creates or increases a partial vacuum between the first surface 32 of the suction disc 30 in the central region and the surface of the caravan 8, which firmly secures the attachment device 20 to the caravan 8.

It is to be noted that, in this embodiment, the same action of rotating the clamping element 24 with respect to the anchor element 22 both clamps the flexible panel 16 between these elements 22, 24 and secures the anchor element 22 to the caravan 8 by forming the partial vacuum. In other embodiments a similar arrangement may be used in which movement of the clamping element 24 with respect to the anchor element 22 acts both to clamp the flexible panel 16 and to firmly attach the anchor member 22 to the caravan 8.

Preferably, as described above, the clamping element 24 is rotatable with respect to the grip element 26 so that, as the clamping element 24 is rotated about the post 38, the grip element 26 does not move rotationally with respect to the anchor element 22 or the flexible panel 16. This has the advantage that the flexible panel 16 is not creased or twisted by the grip element 26 while it is being clamped.

The configuration of the anchor element 22, grip element 26 and clamping element 24 described means that the flexible panel 16 is gripped most firmly between the flange 62 of the grip element 26 and the suction disc 30 at a distance from the hole 70 in the flexible panel 16. Furthermore, the flexible panel 16, in the vicinity of the attachment device 20, is held so that a plane of the flexible panel 16 is substantially parallel to the plane of the surface to which the attachment device 20 is secured.

It will be appreciated that in some embodiments the attachment device 20 comprises only an anchor element 22 and a clamping element 24, and does not include the grip element 26 described above. In these embodiments the flexible panel 16 is gripped between opposing clamping surfaces of the anchor element 22 and the clamping element 24. A potential disadvantage of this arrangement when the clamping element 24 is rotated with respect to the anchor element 22 to secure these parts together, is that the flexible panel 16 may be creased or twisted between the anchor element 22 and the clamping element 24.

Returning to Figures 1 and 2, a plurality of attachment devices 20 are preferably used to secure a length of an edge 10 of a flexible panel 16 to a caravan 8. The attachment devices 20 are spaced apart along the length of the edge 10. Accordingly, a plurality of holes 70 will be provided in the edge region 10 of the flexible panel 16 for receiving the attachment devices 20. As can be seen in Figure 1, the anchor elements 22 may be secured to the outer skin or wall of the caravan 8 or to a window of the caravan 8, so that the flexible panel 16 can be held at any desired location with respect to the side of the caravan 8.

The attachment device(s) 20 of the present invention may be used in addition to a vertical support pole 6 as shown in Figure 2. The vertical support pole 6 may engage with the ground 2 at one end and at the other end be connected to the flexible panel 16 and extended to tension the edge region 10 of the panel 16. Once tensioned, the attachment devices 20 are used to secure the edge region 10 against the side of the caravan 8.

The clamping element 24 may remain permanently connected to the anchor element 22 by means of a strap, cord or hinge member. In these embodiments the means of permanently connecting the clamping element 24 to the anchor element 22 is in addition to and separate from the securing means 28, such that the clamping element 24 may remain connected to the anchor element 22 both in a secured configuration, in which a flexible panel 16 is clamped between the clamping element 24 and the anchor element 22, and an unsecured configuration.

It will be appreciated that although the preceding description has referred to a caravan 8, the attachment device 20 of the present invention may be used to secure a flexible panel of an awning, canopy or other shelter to any suitable rigid structure such as a motorhome, a wall, a building or a boat.

The present invention, therefore, provides an attachment device that allows an edge of a flexible panel of an awning or other shelter to be secured to a rigid structure such as a caravan to assist in creating a weatherproof seal between a part of the shelter and the structure.

## Claims

1. An attachment device (20) for securing a shelter (12) to a rigid structure (8), the shelter (12) comprising a flexible panel (16), and the attachment device (20) comprising:
- an anchor element (22) for securing to a substantially vertical surface of the rigid structure (8), the anchor element (22) comprising a suction disc (30) and a threaded post (38), the suction disc (30) comprising on opposite sides a first surface (32) and a second surface (34), the first surface (32) being configured to create a partial vacuum between the anchor element (22) and said surface whereby, in use, the anchor element (22) is secured to said surface and the threaded post (38) extends away from the second surface (34) whereby said post (38) extends in a direction away from the surface of the structure (8) when the anchor element (22) is secured to the structure (8);
- a clamping element (24) including a threaded recess or bore (48) for receiving and engaging with the threaded post (38) to secure the clamping element (24) to the anchor element (22), such that a part of said flexible panel (16) is clamped between the anchor element (22) and the clamping element (24); and
- a grip element (26) located between at least a part of the anchor element (22) and the clamping element (24), the threaded post (38) extending through an aperture (64) in the grip element (26) wherein the grip element (26) is shaped and configured to allow a central region of the first surface (32) of the suction disc (30) to be pulled in a direction away from said substantially vertical surface of the structure (8) to create the partial vacuum while an edge region of the first surface (32) remains in contact with said surface of the structure (8);
and **characterised in that**:
the grip element (26) comprises a flange (62) configured such that, in use, the flexible panel (16) is clamped between the flange (62) and a part of the anchor element (22).

2. An attachment device (20) as claimed in Claim 1, wherein the anchor element (22) and clamping element (24) include clamping surfaces between which the flexible panel (16) is gripped.

3. An attachment device (20) as claimed in Claim 2, wherein the grip element (26) includes a dome-shaped disc (56) having a first, substantially concave surface (58) and a second, substantially convex surface (60), said concave surface (58) facing the second surface (34) of the suction disc (30) to allow the first surface (32) of the suction disc (30) to be pulled in a direction away from said substantially vertical surface of the structure (8).

4. An attachment device (20) as claimed in Claim 3, wherein the flange (62) comprises a radial flange that extends from a circumferential edge of the dome-shaped disc (56).

5. An attachment device (20) as claimed in Claim 4, wherein the flange (62) has opposite annular surfaces (61, 63) for making gripping contact with a surface of the flexible panel (16) and a clamping surface of the clamping element (24).

6. An attachment device (20) as claimed in Claim 5 in which the clamping element (24) is a cap (40), and the clamping surface is a circular rim (59) of the cap (40).

7. An attachment device (20) as claimed in any preceding claim, wherein the radial flange (62) extends from a circumferential edge of the dome-shaped disc (56), and the diameter of an outer edge of said flange (62) is substantially the same as a diameter of the suction disc (30).

8. An attachment device (20) as claimed in any preceding claim, wherein the dome-shaped disc (20) comprises a hub (57) around said aperture (64) in the grip element (26), and a plurality of spokes (66) extending radially between the hub (57) and the flange (62), said spokes (66) being separated by a corresponding plurality of radial slots (65) extending between said concave and convex surfaces (58, 60) of the dome-shaped disc (56).

9. An attachment device (20) as claimed in any preceding claim, wherein the clamping element (24) is movably connected to the anchor element (22).

10. An assembly comprising a shelter (12) including a flexible panel (16) and at least one attachment device (20) for securing the flexible panel (16) to a rigid structure (8), the attachment device (20) being as claimed in any preceding claim and the flexible panel (16) comprising opposite first and second sides, the suction disc (30) being located on the first side of the flexible panel (16), the threaded post (38) extending through a hole (70) in the flexible panel (16) and the clamping element (24) being primarily located on the second side of the flexible panel (16).

11. An assembly as claimed in Claim 10, comprising a plurality of attachment devices (20) spaced apart along an edge region (10) of the flexible panel (16), and the flexible panel (16) includes a plurality of holes (70) spaced apart along the edge region (10) of the flexible panel (16), each hole (70) being sized to receive therethrough a threaded post (38) of a corresponding anchor element (22).

12. A method of securing a flexible panel (16) of a shelter (12) to a rigid structure (8) using at least one attachment device (20), the flexible panel (16) having for the or each attachment device (20) a hole (70) proximate an edge region (10) thereof and the or each attachment device (20) being as claimed in any one of Claims 1 to 9, the method comprising:
- attaching the suction disc (30) of the or each anchor element (22) to a surface of the structure (8);
- locating a part of the flexible panel (16) between a part of the anchor element (22) and the clamping element (24) of the attachment device (20) such that the threaded post (38) of the or each anchor element (22) extends through a corresponding hole (70) in the flexible panel (16); and
- engaging the threaded recess or bore (48) of the or each clamping element (24) with the threaded post (38) of the corresponding anchor element (22) such that said part of the flexible panel (16) is clamped between the anchor element (22) and the clamping element (24).

13. A method as claimed in Claim 12, the method further comprising positioning the grip element (26) of the attachment device (20) between the flexible panel (16) and the clamping element (24) before engaging the clamping element (24) with the anchor element (22), such that the threaded post (38) extends through the aperture (64) in the grip element (26) and a part of the flexible panel (16) is clamped between the anchor element (22) and the grip element (26).

14. A method as claimed in Claim 12 or Claim 13 comprising:
- attaching a plurality of anchor elements (22) to a surface of the structure (8) in a spaced apart configuration;
- locating an edge region (10) of the flexible panel (16) between the anchor elements (22) and a plurality of clamping elements (24); and
- engaging each of the clamping elements (24) with a respective one of the anchor elements (22) such that the edge region (10) of the flexible panel (16) is clamped between the anchor elements (22) and the clamping elements (24) along a length of the edge region (10).

15. A method as claimed in any one of Claims 12 to 14, when dependent from Claim 8, wherein the method comprises, whilst clamping the flexible panel (16) between the anchor element (22) and the clamping element (24), engaging the flexible panel (16) around said hole (70) with said spokes (66) and slots (65) to prevent relative rotation between the flexible panel (16) and the grip element (26) as a rim (59) of the clamping element (24) bears against said flange (62) to clamp said part of the flexible panel (16) between the anchor element (22) and the clamping element (24).

## Patentansprüche

1. Befestigungseinrichtung (20) zum Sichern eines Schutzdaches (12) an einer starren Struktur (8), wobei das Schutzdach (12) ein flexibles Wandteil (16) umfasst und wobei die Befestigungseinrichtung (20) folgendes umfasst:
- ein Verankerungselement (22) zum Befestigen einer im Wesentlichen vertikalen Fläche der starren Struktur (8), wobei das Verankerungselement (22) eine Saugscheibe (30) und eine mit einem Gewinde versehene Stange (38) umfasst, wobei die Saugscheibe (30) auf gegenüberliegenden Seiten eine erste Fläche (32) und eine zweite Fläche (34) umfasst, wobei die erste Fläche (32) dazu konfiguriert ist, ein partielles Vakuum zwischen dem Verankerungselement (22) und der Fläche zu erzeugen, wodurch das Verankerungselement (22) im Gebrauchszustand an der Fläche befestigt wird und sich die mit Gewinde versehene Stange (38) von der zweiten Fläche (34) weg erstreckt, wodurch die mit Gewinde versehene Stange (38) sich in einer Richtung von der Fläche der Struktur (8) weg erstreckt, wenn das Verankerungselement (22) an der Struktur (8) befestigt wird;
- ein Klemmelement (24), welches eine Gewindeaussparung oder eine Gewindebohrung (48) zum Aufnehmen und Zusammengreifen mit der mit Gewinde versehenen Stange (38) aufweist, um das Klemmelement (24) am Verankerungselement (22) derart zu befestigen, dass ein Teil des flexiblen Wandteils (16) zwischen dem Verankerungselement (22) und dem Klemmelement (24) eingeklemmt wird; und
- ein Greifelement (26), welches sich zwischen wenigstens einem Teil des Verankerungselements (22) und dem Klemmelement (24) befindet, wobei die mit Gewinde versehene Stange (38) sich durch eine Öffnung (64) im Greifelement (26) hindurch erstreckt, wobei das Greifelement (26) so geformt und konfiguriert ist, dass es ermöglicht, dass ein zentraler Bereich der ersten Fläche (32) der Saugscheibe (30) in eine Richtung weg von der im Wesentlichen vertikalen Fläche der Struktur (8) gezogen werden kann, um das partielle Vakuum zu erzeugen, während ein Randbereich der ersten Fläche (32) in Kontakt mit der Fläche der Struktur (8) verbleibt;
und **dadurch gekennzeichnet, dass**:
das Greifelement (26) einen Flansch (62) umfasst,
welcher so konfiguriert ist, dass das flexible Wandteil (16) im Gebrauchszustand zwischen dem Flansch (62) und einem Teil des Verankerungselements (22) eingeklemmt ist.

2. Befestigungseinrichtung (20) nach Anspruch 1,
bei welcher das Verankerungselement (22) und das Klemmelement (24) Klemmflächen aufweisen, zwischen denen das flexible Wandteil (16) erfasst wird.

3. Befestigungseinrichtung (20) nach Anspruch 2,
bei welcher das Greifelement (26) eine kuppelförmige Scheibe (56) aufweist, welche eine erste, im Wesentlichen konkave Fläche (58) und eine zweite, im Wesentlichen konvexe Fläche (60) aufweist, wobei die konkave Fläche (58) der zweiten Fläche (34) der Saugscheibe (30) zugewandt ist, um zu ermöglichen, dass die erste Fläche (32) der Saugscheibe (30) in eine Richtung weg von der im Wesentlichen vertikalen Fläche der Struktur (8) gezogen wird.

4. Befestigungseinrichtung (20) nach Anspruch 3,
bei welcher der Flansch (62) einen radialen Flansch umfasst, welcher sich von einem Umfangsrand der kuppelförmigen Scheibe (56) aus erstreckt.

5. Befestigungseinrichtung (20) nach Anspruch 4,
bei welcher der Flansch (62) gegenüberliegende ringförmige Flächen (61, 63) zum Herstellen eines Greifkontakts mit einer Fläche des flexiblen Wandteils (16) und einer Klemmfläche des Klemmelements (24) aufweist.

6. Befestigungseinrichtung (20) nach Anspruch 5,
bei welcher das Klemmelement (24) eine Kappe (40) ist, und wobei die Klemmfläche ein kreisförmiger Rand (59) der Kappe (40) ist.

7. Befestigungseinrichtung (20) nach einem der vorigen Ansprüche,
bei welcher der radiale Flansch (62) sich von einem Umfangsrand der kuppelförmigen Scheibe (56) aus erstreckt, und wobei der Durchmesser eines Außenrandes des Flansches (62) im Wesentlichen derselbe ist wie der Durchmesser der Saugscheibe (30).

8. Befestigungseinrichtung (20) nach einem der vorigen Ansprüche,
bei welcher die kuppelförmige Scheibe (56) eine Nabe (57) um die Öffnung (64) im Greifelement (26) aufweist, und wobei eine Mehrzahl Speichen (66) sich in radialer Richtung zwischen der Nabe (57) und dem Flansch (62) erstrecken, wobei die Speichen (66) voneinander durch eine entsprechende Mehrzahl radialer Schlitze (65) getrennt sind, welche sich zwischen den konkaven und konvexen Flächen (58, 60) der kuppelförmigen Scheibe (56) erstrecken.

9. Befestigungseinrichtung (20) nach einem der vorigen Ansprüche,
bei welcher das Klemmelement (24) beweglich mit dem Verankerungselement (22) verbunden ist.

10. Anordnung, umfassend ein Schutzdach (12), welches ein flexibles Wandteil (16) und wenigstens eine Befestigungseinrichtung (20) zum Sichern des flexiblen Wandteils (16) an einer starren Struktur (8) aufweist, wobei die Befestigungseinrichtung (20) nach einem der vorigen Ansprüche ausgebildet ist und das flexible Wand-teil (16) einander gegenüberliegende erste und zweite Seiten aufweist, wobei die Saugscheibe (30) auf der ersten Seite des flexiblen Wandteils (16) angeordnet ist, die mit Gewinde versehene Stange (38) sich durch ein Loch (70) im flexiblen Wandteil (16) erstreckt und das Klemmelement (24) primär auf der zweiten Seite des flexiblen Wandteils (16) angeordnet ist.

11. Anordnung nach Anspruch 10,
umfassend eine Mehrzahl Befestigungseinrichtungen (20), die entlang eines Randbereich (10) des flexiblen Wandteils (16) voneinander beabstandet sind, und wobei das flexible Wandteil (16) eine Mehrzahl Löcher (70) aufweist, die entlang des Randbereichs (10) des flexiblen Wandteils (16) voneinander beabstandet sind, wobei jedes Loch (70) so bemessen ist, dass es eine mit Gewinde versehene Stange (38) eines entsprechenden Verankerungselements (22) aufnehmen kann.

12. Verfahren zum Sichern eines flexiblen Wandteils (16) eines Schutzdaches (12) an einer starren Struktur (8) unter Verwendung wenigstens einer Befestigungseinrichtung (20), wobei das flexible Wandteil (16) für die oder jede Befestigungseinrichtung (20) ein Loch (70) benachbart zu einem Randbereich (10) hiervon aufweist, und wobei die oder jede Befestigungseinrichtung (20) nach einem der Ansprüche 1
- 9 ausgebildet ist, wobei das Verfahren folgendes umfasst:
- Anbringen der Saugscheibe (30) des oder jedes Verankerungselements (22) an einer Fläche der Struktur (8) ;
- Anordnen eines Teils des flexiblen Wandteils (16) zwischen einem Teil des Verankerungselements (22) und dem Klemmelement (24) der Befestigungseinrichtung (20) derart, dass die mit Gewinde versehene Stange (38) von dem oder jedem Verankerungselement (22) sich durch ein entsprechendes Loch (70) in dem flexiblen Wandteil (16) erstreckt; und
- Zusammenbringen der Gewindeaussparung oder Gewindebohrung (48) des oder jedes Klemmelements (24) mit der mit Gewinde versehenen Stange (38) des entsprechenden Verankerungselements (22) derart, dass der Teil des flexiblen Wandteils (16) zwischen dem Verankerungselement (22) und dem Klemmelement (24) eingeklemmt wird.

13. Verfahren nach Anspruch 12,
wobei das Verfahren weiter umfasst, dass das Greifelement (26) der Befestigungseinrichtung (20) zwischen dem flexiblen Wandteil (16) und dem Klemmelement (24) positioniert wird, bevor das Klemmelement (24) mit dem Verankerungselement (22) in Eingriff gebracht wird, so dass die mit Gewinde versehene Stange (38) sich durch die Öffnung (64) im Greifelement (26) erstreckt und ein Teil des flexiblen Wandteils (16) zwischen dem Verankerungselement (22) und dem Greifelement (26) eingeklemmt wird.

14. Verfahren nach Anspruch 12 oder Anspruch 13, umfassend:
- Anbringen einer Mehrzahl Verankerungselemente (22) an einer Fläche der Struktur (8) in einer voneinander beabstandeten Konfiguration;
- Anordnen eines Randbereich (10) des flexiblen Wandteils (16) zwischen den Verankerungselementen (22) und einer Mehrzahl Klemmelemente (24); und
- in Eingriff bringen von jedem der Klemmelemente (24) mit einem entsprechenden Verankerungselement (22) derart, dass der Randbereich (14) des flexiblen Wandteils (16) zwischen den Verankerungselementen (22) und den Klemmelementen (24) entlang eines Längenabschnitts des Randbereiches (10) eingeklemmt wird.

15. Verfahren nach einem der Ansprüche 12 - 14, sofern auch von Anspruch 8 abhängig,
wobei das Verfahren während des Einklemmens des flexiblen Wandteils (16) zwischen dem Verankerungselement (22) und dem Klemmelement (24) umfasst, dass das flexible Wandteil (16) um das Loch (70) herum mit den Speichen (66) und Schlitzen (65) in Eingriff gebracht wird, um zu verhindern, dass zwischen dem flexiblen Wandteil (16) und dem Greifelement (26) eine relative Drehung stattfindet, während ein Rand (59) des Klemmelements (24) gegen den Flansch (62) drückt, um den genannten Teil des flexiblen Wandteils (16) zwischen dem Verankerungselement (22) und dem Klemmelement (24) einzuklemmen.

## Revendications

1. Dispositif de fixation (20) pour fixer un abri (12) à une structure rigide (8), l'abri (12) comprenant un panneau souple (16), et le dispositif de fixation (20) comprenant :
- un élément d'ancrage (22) à fixer à une surface sensiblement verticale de la structure rigide (8), l'élément d'ancrage (22) comprenant une ventouse (30) et une tige filetée (38), la ventouse (30) comprenant sur des côtés opposés une première surface (32) et une second surface (34), la première surface (32) étant configurée pour créer un vide partiel entre l'élément d'ancrage (22) et ladite surface, ce par quoi, en utilisation, l'élément d'ancrage (22) est fixé à ladite surface et la tige filetée (38) s'étend à l'opposé de la seconde surface (34), ce par quoi ladite tige (38) s'étend dans une direction s'éloignant de la surface de la structure (8) lorsque l'élément d'ancrage (22) est fixé à la structure (8) ;
- un élément de serrage (24) comprenant un alésage ou évidement fileté (48) pour recevoir et s'engager avec la tige filetée (38) afin de fixer l'élément de serrage (24) à l'élément d'ancrage (22), de telle sorte qu'une partie dudit panneau souple (16) est serrée entre l'élément d'ancrage (22) et l'élément de serrage (24) ; et
- un élément de saisie (26) situé entre au moins une partie de l'élément d'ancrage (22) et l'élément de serrage (24), la tige filetée (38) s'étendant à travers une ouverture (64) dans l'élément de saisie (26), l'élément de saisie (26) étant formé et configuré pour permettre à une région centrale de la première surface (32) de la ventouse (30) d'être tirée dans une direction s'éloignant de ladite surface sensiblement verticale de la structure (8) pour créer le vide partiel tandis qu'une région de bord de la première surface (32) reste en contact avec ladite surface de la structure (8) ; et
**caractérisé par le fait que** :
l'élément de saisie (26) comprend une bride (62) configurée de telle sorte qu'en utilisation le panneau souple (16) est serré entre la bride (62) et une partie de l'élément d'ancrage (22).

2. Dispositif de fixation (20) selon la revendication 1, dans lequel l'élément d'ancrage (22) et l'élément de serrage (24) comprennent des surfaces de serrage entre lesquelles le panneau souple (16) est saisi.

3. Dispositif de fixation (20) selon la revendication 2, dans lequel l'élément de saisie (26) comprend un disque en forme de dôme (56) ayant une première surface sensiblement concave (58) et une seconde surface sensiblement convexe (60), ladite surface concave (58) faisant face à la seconde surface (34) de la ventouse (30) pour permettre à la première surface (32) de la ventouse (30) d'être tirée dans une direction s'éloignant de ladite surface sensiblement verticale de la structure (8).

4. Dispositif de fixation (20) selon la revendication 3, dans lequel la bride (62) comprend une bride radiale qui s'étend à partir d'un bord circonférentiel du disque en forme de dôme (56).

5. Dispositif de fixation (20) selon la revendication 4, dans lequel la bride (62) a des surfaces annulaires opposées (61, 63) pour établir un contact de saisie avec une surface du panneau souple (16) et une surface de serrage de l'élément de serrage (24).

6. Dispositif de fixation (20) selon la revendication 5, dans lequel l'élément de serrage (24) est un capuchon (40), et la surface de serrage est un rebord circulaire (59) du capuchon (40).

7. Dispositif de fixation (20) selon l'une quelconque des revendications précédentes, dans lequel la bride radiale (62) s'étend à partir d'un bord circonférentiel du disque en forme de dôme (56), et le diamètre d'un bord externe de ladite bride (62) est sensiblement le même qu'un diamètre de la ventouse (30).

8. Dispositif de fixation (20) selon l'une quelconque des revendications précédentes, dans lequel le disque en forme de dôme (20) comprend un moyeu (57) autour de ladite ouverture (64) dans l'élément de saisie (26), et une pluralité de rayons (66) s'étendant radialement entre le moyeu (57) et la bride (62), lesdits rayons (66) étant séparés par une pluralité correspondante de fentes radiales (65) s'étendant entre lesdites surfaces concave et convexe (58, 60) du disque en forme de dôme (56).

9. Dispositif de fixation (20) selon l'une quelconque des revendications précédentes, dans lequel l'élément de serrage (24) est relié de manière mobile à l'élément d'ancrage (22).

10. Ensemble comprenant un abri (12) comportant un panneau souple (16) et au moins un dispositif de fixation (20) pour fixer le panneau souple (16) à une structure rigide (8), le dispositif de fixation (20) étant selon l'une quelconque des revendications précédentes et le panneau souple (16) comprenant des premier et second côtés opposés, la ventouse (30) étant située sur le premier côté du panneau souple (16), la tige filetée (38) s'étendant à travers un trou (70) dans le panneau souple (16), et l'élément de serrage (24) étant situé principalement sur le second côté du panneau souple (16).

11. Ensemble selon la revendication 10, comprenant une pluralité de dispositifs de fixation (20) espacés le long d'une région de bord (10) du panneau souple (16), et le panneau souple (16) comprend une pluralité de trous (70) espacés le long de la région de bord (10) du panneau souple (16), chaque trou (70) étant dimensionné pour recevoir, à travers celui-ci, une tige filetée (38) d'un élément d'ancrage correspondant (22).

12. Procédé de fixation d'un panneau souple (16) d'un abri (12) à une structure rigide (8) à l'aide d'au moins un dispositif de fixation (20), le panneau souple (16) ayant, pour le ou chaque dispositif de fixation (20), un trou (70) à proximité d'une région de bord (10) de celui-ci et le ou chaque dispositif de fixation (20) étant selon l'une quelconque des revendications 1 à 9, le procédé comprenant :
- fixer la ventouse (30) du ou de chaque élément d'ancrage (22) à une surface de la structure (8) ;
- situer une partie du panneau souple (16) entre une partie de l'élément d'ancrage (22) et l'élément de serrage (24) du dispositif de fixation (20) de telle sorte que la tige filetée (38) du ou de chaque élément d'ancrage (22) s'étend à travers un trou correspondant (70) dans le panneau souple (16) ; et
- engager l'alésage ou évidement fileté (48) du ou de chaque élément de serrage (24) avec la tige filetée (38) de l'élément d'ancrage correspondant (22) de telle sorte que ladite partie du panneau souple (16) est serrée entre l'élément d'ancrage (22) et l'élément de serrage (24).

13. Procédé selon la revendication 12, le procédé comprenant en outre positionner l'élément de saisie (26) du dispositif de fixation (20) entre le panneau souple (16) et l'élément de serrage (24) avant d'engager l'élément de serrage (24) avec l'élément d'ancrage (22), de telle sorte que la tige filetée (38) s'étend à travers l'ouverture (64) dans l'élément de saisie (26) et une partie du panneau souple (16) est serrée entre l'élément d'ancrage (22) et l'élément de saisie (26).

14. Procédé selon la revendication 12 ou la revendication 13, comprenant :
- fixer une pluralité d'éléments d'ancrage (22) à une surface de la structure (8) dans une configuration espacée ;
- situer une région de bord (10) du panneau souple (16) entre les éléments d'ancrage (22) et une pluralité d'éléments de serrage (24) ; et
- engager chacun des éléments de serrage (24) avec un respectif des éléments d'ancrage (22) de telle sorte que la région de bord (10) du panneau souple (16) est serrée entre les éléments d'ancrage (22) et les éléments de serrage (24) le long d'une longueur de la région de bord (10).

15. Procédé selon l'une quelconque des revendications 12 à 14, lorsque prise en dépendance de la revendication 8, le procédé comprenant, tout en serrant le panneau souple (16) entre l'élément d'ancrage (22) et l'élément de serrage (24), engager le panneau souple (16) autour dudit trou (70) avec lesdits rayons (66) et lesdites fentes (65) pour empêcher une rotation relative entre le panneau souple (16) et l'élément de saisie (26) à mesure qu'un rebord (59) de l'élément de serrage (24) est en appui contre ladite bride (62) pour serrer ladite partie du panneau souple (16) entre l'élément d'ancrage (22) et l'élément de serrage (24).
